# EUROPEAN PATENT APPLICATION

(11) **EP 1 977 669 A1**
(43) Date of publication of application: **08.10.2008**
(21) Application number: 08103310.2
(22) Date of filing: 02.04.2008
(51) Int. Cl.: A47J 42/06, A47J 42/40

(54) **Improved coffee grinder-dispenser**

(30) Priority: 02.04.2007 IT VE20070012 U
(71) Applicant: Elektra S.R.L., 31030 Dosson di Casier (IT)
(72) Inventor: Fregnan, Florindo, 31030 Dosson (IT)
(74) Representative: Piovesana, Paolo

(57) **Abstract**

An improved coffee grinder-dispenser, comprising a fixed grinding wheel, a rotatable grinding wheel (8) disposed coaxial to the fixed grinding wheel, and a wheel holder (10) rotatably rigid with said rotatable grinding wheel and provided with peripheral protuberances acting in the sense of urging the coffee powder towards the outside through an aperture (24) provided in the grinder-dispenser in a position facing said wheel holder (10), characterised in that said wheel holder comprises a discoidal plate (18) provided peripherally with a plurality of teeth (20) of constant thickness substantially equal to the plate thickness.

## Description

The present invention relates to an improved coffee grinder-dispenser.

Coffee grinders with dispensers are known; they comprise a fixed grinding wheel rigid with the body of the coffee grinder, and a rotatable grinding wheel coaxial with the fixed grinding wheel and fixed to the shaft of an electric motor housed in the body of the coffee grinder.

The rotatable grinding wheel is rigid with a rotary wheel holder comprising a circular plate on which the rotatable grinding wheel rests, and a plurality of inclined fins, generally three in number, which project upwards from the circular plate and by virtue of their inclined arrangement urge the just ground coffee outwards through an aperture provided in the grinder-dispenser and having a height equal to the height of said fins, to cause the coffee to fall into the dispenser.

Grinder-dispensers are also known in which the coffee dispensing is timed, in the sense that the motor to which the grinding wheel is connected is operated for a short time period on the basis of the coffee quantity to be ground for preparing one or two cups.

Although theoretically a constant time of powering the motor driving the grinding wheel and wheel holder should result in a constant quantity of coffee ground as dispensed by the grinder-dispenser, in practice there are a series of causes which influence the coffee quantity dispensed at each operation of the grinder-dispenser.

A first cause is related to the inertia of the rotating part of the electric motor, grinding wheel and wheel holder, this inertia meaning that even after interrupting the electric power to the motor, this continues to rotate for a certain time, which is not itself constant, it being linked to the resistance encountered by the grinding wheel in rotating, due to the effect of the grinding action.

Another cause is related to the height of the fins on the wheel holder and to their position at the moment of stoppage of the rotary unit.

In particular, the greater the fin height, the greater is the height of the chamber between the wheel holder and the walls of the grinder-dispenser, and moreover the greater the distance of the fin upstream from the aperture in the grinder-dispenser with reference to the direction of rotation of the rotary unit at the moment of its stoppage, the greater is the coffee quantity remaining in the grinder-dispenser.

Experimental tests have shown that the coffee quantity dispensed by a traditional grinder-dispenser can vary by as much as 10% about a nominal value, this variability substantially influencing the constancy of the organoleptic characteristics of the prepared coffee drink.

An object of the invention is to eliminate this drawback by providing a grinder-dispenser able to dispense coffee powder in a substantially constant quantity.

Another object of the invention is to provide a grinder-dispenser able to substantially reduce coffee heating, inevitably connected with the grinding action on the grains for their transformation into powder.

These and other objects which will be apparent from the ensuing description are attained, according to the invention, by an improved coffee grinder-dispenser, as claimed in claim 1.

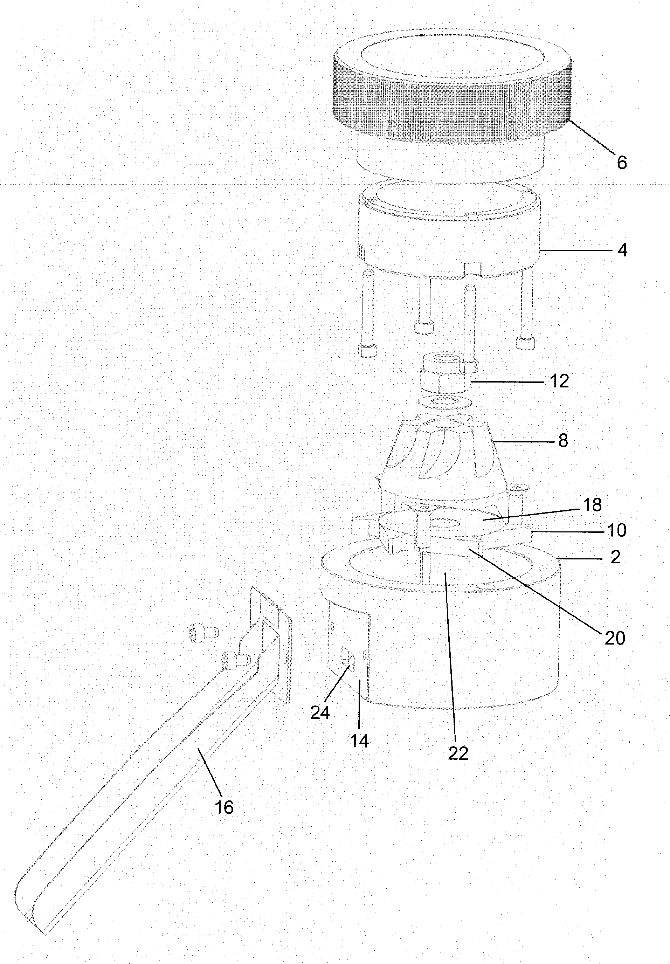

A preferred embodiment of the invention is further clarified hereinafter with reference to the accompanying drawing, showing an exploded perspective view of that part of the grinder-dispenser in which the coffee is ground and the powder dispensed.

As can be seen from the drawing, the grinder-dispenser of the invention comprises a base, not shown in the drawing, a seat 2 for a pair of grinding wheels, the outer grinding wheel of which is fixed, mounted on a wheel holder 4 and associated with an adjustment ring nut, and the inner grinding wheel 8 of which is movable.

Both the fixed grinding wheel and the movable grinding wheel 8 are frusto-conical, in that this shape increases the grinding surface and for equal productivity enables grinding to be carried out at low speed (not more than 500 r.p.m.), i.e. under optimal conditions for combining good production efficiency with low heating of the coffee powder, hence preserving its organoleptic characteristics.

The movable grinding wheel 8 rests on a wheel holder 10, and together with this latter is fixed by a nut 12 to the vertical shaft of an electric motor, not shown in the drawings but housed within the grinder-dispenser base.

The seat 2 for the grinding wheels is of cylindrical annular shape and presents on its outer surface a flattened portion 14, to which a chute 16 for the coffee powder can be applied.

The wheel holder 10 consists of a discoidal plate 18, from which there extend a plurality of teeth 20 which, with reference to the direction of rotation of the grinding wheel 8 and wheel holder 10, indicated by the arrow 22 in the drawing, have their downstream side straight and inclined, and their upstream side curved and hollow.

The entire wheel holder 10, i.e. the combination of its central discoidal portion 10 and its teeth 20, is of constant thickness substantially less (about 1/3) than the overall size of those wheel holders provided with fins.

An aperture 24 is provided in the flattened portion 14 of the wheel holder seat 2 for the exit of the coffee powder. The height of this aperture 24 is substantially equal to the thickness of the wheel holder 10.

The grinder-dispenser of the invention operates in the following manner.

The coffee grains are introduced in traditional manner between the fixed grinding wheel and the rotatable grinding wheel 8, which is rotated to reduce the coffee grains into powder. As the powder forms, it falls between the teeth 20 of the wheel holder 10 and is rotated thereby within the interspace existing between the wheel holder and the inner cylindrical wall of the seat 2. At the same time the inclination of the teeth 20 determines on the powder a centrifugal force which causes it to exit through the aperture 24 provided in the flattened portion 14 of the seat, from which it travels along the chute 16.

Because of the large number of teeth 20, the very small space between one tooth and the next, and the very low height of the wheel holder, any variation in the powder quantity at each operation of the grinder-dispenser is minimal, hence resulting in high dispensing constancy.

Experimental tests have shown that these variations in coffee quantity at each operation of the grinder-dispenser do not exceed 3%, resulting in very constant quality of the prepared coffee drink.

Moreover the frusto-conical shape of the two grinding wheels and their consequent high grinding surface enable high productivity to be achieved even with a rotational speed of the movable grinding wheel 8 of the order of 500 r.p.m. As at this speed the coffee powder remains virtually unheated, this further contributes to the non-alteration of the organoleptic characteristics of the prepared coffee drink.

## Claims

1. An improved coffee grinder-dispenser, comprising a fixed grinding wheel, a rotatable grinding wheel (8) disposed coaxial to the fixed grinding wheel, and a wheel holder (10) rotatably rigid with said rotatable grinding wheel and provided with peripheral protuberances acting in the sense of urging the coffee powder towards the outside through an aperture (24) provided in the grinder-dispenser in a position facing said wheel holder (10), **characterised in that** said wheel holder comprises a discoidal plate (18) provided peripherally with a plurality of teeth (20) of constant thickness substantially equal to the plate thickness.

2. A grinder-dispenser as claimed in claim 1, **characterised in that** said teeth are disposed equiangular on said discoidal element.

3. A grinder-dispenser as claimed in claim 1, **characterised by** comprising at least six teeth (20).

4. A grinder-dispenser as claimed in claim 1, **characterised in that**, with reference to the direction of rotation of the wheel holder (10), each tooth (20) has its downstream side straight and inclined, and its upstream side curved and hollow.

5. A grinder-dispenser as claimed in claim 1, **characterised in that** the fixed grinding wheel and the rotatable grinding wheel (8) are of frusto-conical type.
